(19) Europäisches Patentamt
European Patent Office
Office européen des brevets

(11) **EP 4 050 207 A1**

(12) # EUROPEAN PATENT APPLICATION

(43) Date of publication:
**31.08.2022 Bulletin 2022/35**

(21) Application number: **21382152.3**

(22) Date of filing: **24.02.2021**

(51) International Patent Classification (IPC):
**F03D 7/02** (2006.01)    **F03D 7/04** (2006.01)

(52) Cooperative Patent Classification (CPC):
**F03D 7/0224; F03D 7/024; F03D 7/045;**
F03D 13/30; F05B 2260/84; F05B 2270/20;
F05B 2270/32; F05B 2270/321; F05B 2270/326;
F05B 2270/327; F05B 2270/8042

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Gamesa Renewable Energy
Innovation &
Technology S.L.
31621 Sarriguren (Navarra) (ES)**

(72) Inventor: **The designation of the inventor has not
yet been filed**

(74) Representative: **Aspacher, Karl-Georg
Siemens Gamesa Renewable Energy GmbH & Co.
KG
Otto-Hahn-Ring 6
81739 München (DE)**

(54) ## METHOD OF CONFIGURING A WIND TURBINE PITCH CONTROLLER

(57)    The invention describes a method of configuring a wind turbine pitch controller (1) to compute pitch setpoints (PS1, PS2, PS3) for rotor blades (20) of a wind turbine (2), the method comprising the steps of identifying a plurality of target control objectives ($J_1$, $J_2$, $J_3$, $J_4$, $J_5$) for a specific wind turbine (2); developing a first state-space model (11M) for the computation of a collective pitch term (110) of a pitch setpoint (PS1, PS2, PS3) and developing a second state-space model (12M) for the computation of individual pitch terms (121, 122, 123) of the pitch setpoints (PS1, PS2, PS3), which state-space models (11M, 12M) are developed on the basis of the target control objectives ($J_1$, $J_2$, $J_3$, $J_4$, $J_5$) and a wind vector (250); and installing the pitch controller (1) in a memory (80) of a wind turbine controller (8) of that wind turbine (2). The invention further describes a wind turbine pitch controller (1) configured using such a method; and a wind turbine (2) comprising such a pitch controller (1).

FIG 2

EP 4 050 207 A1

**Description**

Background

The installation of wind turbines with large rotor diameters and tall towers made of relatively "soft" material is becoming more widespread. The structural loads acting on wind turbine components is a very significant factor that must be considered, especially in view of the need to reduce material consumption in the manufacture of various components, and the need to reduce to levelized cost of energy (LCOE). For example, efforts are made to reduce the amount of material in the manufacture of long rotor blades. Equally, it is desirable to reduce the quantity of concrete or steel used to construct tall wind turbine towers. These structural aspects must be taken into consideration during operation of a large wind turbine, owing to the relatively higher loads seen by the "soft" (i.e. lighter and more flexible) components.

It is known to operate a wind turbine in such a way as to avoid excessive tower oscillations, to avoid excessive rotor blade deflection, etc. Such control methods are generally based on sensor input from strain gauges, accelerometers, etc. For example, sensor outputs that indicate unfavourably high loads on the rotor blades may be followed by a pitch reference that reduces wind loading. Control of a prior art wind turbine can use such sensor information to keep loads at an acceptable level while maintaining a favourably high power output.

The wind speed at a wind turbine rotor is seldom constant. Particularly in the case of a tall tower and large rotor, wind shear can result in significant differences in wind speed at the top and bottom of the rotor swept area. Furthermore, even for conditions in which the wind direction is largely steady, the airflow arriving at the aerodynamic rotor can veer erratically. In the case of a wind park, a wind turbine that is downwind of another wind turbine may receive a turbulent or erratic airflow caused by the eddies and vortices generated by its upwind neighbour. These aspects mean that an accurate measurement of wind speed is one of the most important inputs to a wind turbine controller. However, conventional wind speed sensors (cup or vane anemometers, ultrasonic anemometers etc.) only measure the wind speed at the wind turbine, usually at a position behind the aerodynamic rotor. This means that a pitch angle correction in response to a sensed wind condition may already be "out of date" by the time it is performed.

A more accurate wind speed measurement is possible with lidar (from "light detection and ranging"). A lidar system can be mounted towards the front of the wind turbine to measure wind speed at a distance upwind from the rotor plane or rotor swept area. From the sensed values of wind speed at multiple points upwind from the rotor plane, it is possible to obtain a more accurate prediction of wind speed at the rotor plane. A known lidar-assisted pitch control approach is based on a simple feed-forward algorithm that uses wind speeds predicted for the rotor plane. However, the known wind turbine control approaches that implement lidar do this independently of other control algorithms, so that the lidar system is not used to its full advantage.

It is therefore an object of the invention to provide an improved way of implementing lidar in the control of a wind turbine.

This object is achieved by the method of claim 1 of configuring a wind turbine pitch controller and by the wind turbine pitch controller of claim 8.

Description

According to the invention, the method of configuring a lidar-assisted wind turbine pitch controller comprises the steps of identifying target control objectives or "optimization constants" for that specific wind turbine, and developing state-space matrices of a pitch control algorithm on the basis of the target control objectives and a wind vector obtained from the lidar system. The pitch control algorithm is developed "offline", and is optimized to generate individual pitch setpoints for the wind turbine rotor blades (usually three) that will fulfil the control objectives in any operating condition. The customized pitch control algorithm is then installed in a memory of a wind turbine controller, for example in the memory of a PLC (programmable logic controller) of that wind turbine.

The wind vector shall be understood to comprise a wind speed component, a wind shear component and a wind veer component. The wind vector can be visualized as a vector in a three-dimensional Cartesian space in which the rotor plane is defined by two of the three major axes: the wind speed component lies along the X-axis, i.e. the axis of rotation; the wind veer component is directed along the Y-axis, i.e. the horizontal axis of the rotor plane, and the wind sheer component is directed along the Z-axis, i.e. the vertical axis of the rotor plane.

The control objectives or optimization constants are specific to a wind turbine, and shall be understood to define targets such as annual energy production (AEP), maximum structural load, etc. Such parameters can vary even for wind turbines of the same type in the same wind park. Even for a stand-alone wind turbine, the wind is seldom constant and can exhibit wind shear and wind veer, each of which affects the rotor blades differently on account of the different angular positions of the rotor blades as they rotate in the rotor plane. Because the inventive method considers each target objective in the context of a specific wind turbine, it provides a way of optimizing pitch control for that wind turbine, whether it is a stand-alone wind turbine or one of many in a wind park.

According to the invention, the wind turbine pitch controller is configured using the method described above to generate a pitch setpoint for each rotor blade. A pitch setpoint or pitch reference shall be understood as a command to a pitch system to turn the rotor blade to a particular pitch angle. The pitch controller comprises a means of receiving an input wind vector from a lidar system of the wind turbine. The pitch controller further comprises a first module configured to compute a common pitch term for the rotor blades, by applying a first state-space model. The pitch controller further comprises a second module to compute an individual pitch term for each of the rotor blades, by applying a second state-space model. The individual pitch setpoints are obtained by summing each individual pitch term with the common pitch term. Usually, a wind turbine has three rotor blades, so that the inventive pitch controller generates three pitch setpoints from the common pitch term and three individual pitch terms.

A state-space model of a control system relates input variables, output variables and state variables by first-order differential equations or difference equations. The "state variables" are time-variant, i.e. a state variable can change over time in a way that depends on its previous value as well as on the input variables. The invention is based on the insight that several variables - in addition to wind variables - collectively determine an optimal pitch angle for a rotor blade at any one time, and that this optimal pitch angle can be computed using a state-space model approach. The inventive method applies a first state-space model to compute a common pitch term, and a second state-space model to compute the individual pitch terms. Each state-space model is fed with the relevant parameters and a wind vector for the rotor plane predicted from lidar measurements.

An advantage of the inventive pitch controller is that the power output of a wind turbine can be optimized, since the pitch controller can react more precisely to alterations in the incoming wind and the rotor blades can be pitched more accurately. Furthermore, the inventive pitch controller can extend the rotor blade lifetime, because the rotor blades can be pitched to avoid excessive overloading. Similarly, fatigue damage to other components can be favourably reduced, since the rotor blades can be more optimally pitched to reduce structural loads on the wind turbine.

The units or modules of the pitch controller mentioned above, in particular the first module and the second module, can be realised as software modules of an algorithm running on a processor (e.g. a PLC) of a wind turbine controller. A realisation largely in the form of software modules can have the advantage that applications already installed on an existing system can be updated, with relatively little effort, to implement the inventive pitch controller.

According to the invention, the wind turbine comprises a tower supporting a nacelle and all other components including an aerodynamic rotor mounted to the nacelle. The aerodynamic rotor comprises a plurality of rotor blades mounted to a hub and configured to drive a generator. The wind turbine further comprises a lidar arrangement that computes a wind vector at the rotor plane of the aerodynamic rotor from wind speed measurements in a measuring plane at a distance upwind of the aerodynamic rotor. The wind turbine further comprises an instance of the inventive pitch controller to provide individual pitch setpoints for the rotor blades.

Particularly advantageous embodiments and features of the invention are given by the dependent claims, as revealed in the following description. Features of different claim categories may be combined as appropriate to give further embodiments not described herein.

In the following, it may be assumed that a wind turbine has three pitchable rotor blades mounted to its hub, and that the wind turbine is a variable-speed wind turbine.

A lidar system can be mounted at any suitable location on the nacelle or hub (also referred to as "spinner") to accurately measure wind speed and wind turbulence upwind of the rotor plane. Measurements from the lidar unit are used to determine a wind vector. As explained above, the wind vector is defined in a Cartesian space defined by three axes, two of which are defined by the rotor plane (the plane of the aerodynamic rotor with its three rotor blades). The third axis is the rotational axis of the aerodynamic rotor. The origin of the wind vector is at the centre of the rotor plane. While the axes can be defined in any suitable way, a common convention assigns the rotational axis to the X-axis, and the rotor plane to the Y-axis and Z-axis. The wind vector comprises a wind speed component directed along the X axis, a wind shear component directed along the Z-axis, and a wind veer component directed along the Y-axis. The wind speed component represents the average wind speed over the rotor plane; the wind shear component is the difference in wind speed between the upper and lower levels of the rotor plane; and the wind veer component is a measure of the change in wind direction relative to the rotational axis. Generally, the aerodynamic rotor is continually yawed to face directly into the wind, but the wind can still exhibit a tendency to veer in some direction. This is quantified in the wind veer component.

The invention takes the approach of identifying factors that are specific to a particular wind turbine, and developing parameters for the control algorithm on the basis of those turbine-specific parameters. This "control synthesis" step is performed off-line, for example in the planning stage, in advance of commissioning of an actual wind turbine. At the outset of the control synthesis process, targets or optimization constants are identified for a specific wind turbine, and an optimization cost function is solved to obtain control specifications. A control specification may represent the desired or required behaviour of a particular parameter of the wind turbine dynamics that is to be achieved by control design. For example, a specification might be the magnitude of tower loading as a function of wind input in the frequency domain; another specification might be the magnitude of generator speed as a function of wind input in the frequency domain. Each of these exemplary parameters is to some extent dependent on the incoming wind, so that the control algorithm is given the lidar wind vector as "wind input".

The first module of the inventive pitch controller applies the first state-space model to compute a common pitch term as its contribution to pitch control, and may be referred to as the "common pitch control module" or "CPC module" in the following. Similarly, the second module of the inventive pitch controller applies the second state-space model to compute the individual pitch terms, and this module may be referred to as the "individual pitch control module" or "IPC module" in the following.

A first set of state-space matrices is developed for the first state-space model. The input vector of the first state-space model comprises a generator speed component, a nacelle acceleration component, and a wind speed component of the wind vector. The output variable of the first state-space model is the common pitch term.

A second set of state-space matrices is developed for a second state-space model whose output variable is a vector comprising a rotor plane pitch tilt component and a rotor plane pitch yaw component. The input vector of the second state-space model comprises a wind yaw component and a wind tilt component, computed from the wind vector, and also a nacelle acceleration component. The IPC module is further configured to derive individual pitch setpoints from the pitch yaw term and the pitch tilt term provided by the second state-space model. To this end, the IPC module preferably comprises a suitable transform module that transforms the pitch yaw and tilt terms from their stationary reference frame to a rotating reference frame. An example of such a transform is the Coleman transform that computes the individual pitch terms from the rotor azimuth value, the pitch yaw term and the pitch tilt term.

Design of the CPC module and the IPC module may be referred to as "control synthesis" and shall be understood to mean the offline development and customization of state-space models of a control algorithm that will be used in real time to compute pitch references for the rotor blades. The outcome of control synthesis is a customized pitch control algorithm that will be executed in real time by the wind turbine controller.

The state-space matrices are developed, for example in an iterative process, to fulfil the control specifications. The method comprises a final step of validating the closed-loop response of the control algorithm prior to installing the control algorithm in a memory of a wind turbine controller.

The control synthesis preferably comprises a step of determining specifications for a particular wind turbine on the basis of target control objectives for that wind turbine. The state-space matrices are then developed to arrive at state-space models for a pitch controller that will pitch the rotor blades during operation of the wind turbine in such a way that the target objectives of that wind turbine will be achieved.

Tower oscillations are acceptable to a certain extent during operation of a wind turbine, and a wind turbine tower may oscillate at a certain frequency determined to a large extent by its constructional parameters. The greatest amplitude is measured at the top of the tower, i.e. at nacelle level, so that the terms "tower oscillations" and "nacelle oscillations" may be used interchangeably. However, it is important to ensure that the amplitudes of fore-aft and/or side-to-side oscillations do not exceed their respective threshold levels for that wind turbine. The frequency and amplitude of oscillation in a structure can be measured by an accelerometer. In a preferred embodiment of the invention, a nacelle fore-aft acceleration value contributes to the computation of the common pitch term and a nacelle side-to-side oscillation value contributes to the computation of the individual pitch terms. A nacelle acceleration value can be measured at intervals or continuously by a suitable sensor arrangement, e.g. one or more accelerometers arranged in the tower and/or nacelle. With this information, pitch setpoints can be computed in order to deploy active damping if necessary in order to reduce the oscillation of tower and nacelle.

The generator rotational velocity ("generator speed") is determined to a large extent by the rotational velocity of the aerodynamic rotor, which in turn can be determined by the pitch angles of the rotor blades. A variable-speed wind turbine is generally controlled to ensure that the generator speed does not exceed an upper safety threshold, and so that it does not drop below a lower stall threshold. Therefore, in a further preferred embodiment of the invention, the generator velocity is also considered when computing the common pitch term. The generator speed can be determined in any suitable manner, for example by an encoder mounted at a suitable location in the generator.

As mentioned above, wind shear can lead to significantly higher wind loading for a rotor blade near the "12 o'clock" position, compared to wind loading on the same rotor blade when it is near the "6 o'clock" position. Therefore, in a preferred embodiment of the invention, the angular position of a rotor blade is considered in the computation of its individual pitch term. The angular position of a rotor blade can be determined from the rotor azimuth angle provided by a rotor encoder, for example.

Other objects and features of the present invention will become apparent from the following detailed descriptions considered in conjunction with the accompanying drawings. It is to be understood, however, that the drawings are designed solely for the purposes of illustration and not as a definition of the limits of the invention.

Figure 1 shows a schematic diagram of a variable-speed wind turbine;

Figure 2 is a block diagram including an embodiment of the inventive pitch controller in a control arrangement of a wind turbine as shown in Figure 1;

Figure 3 shows a block diagram of the CPC module of the pitch controller of Figure 2;

Figure 4 shows a block diagram of the IPC module of the pitch controller of Figure 2;

Figure 5 is a block diagram to illustrate the steps of the inventive control synthesis method;

Figure 6 and Figure 7 illustrate exemplary stages in the control synthesis process of Figure 5;

Figure 8 is a block diagram to illustrate the inventive control synthesis method;

Figure 9 is a block diagram of a state-space model;

Figure 10 shows a prior art pitch controller of a variable-speed wind turbine;

Figure 11 illustrates a stage in the control synthesis process of Figure 5.

In the diagrams, like numbers refer to like objects throughout. Objects in the diagrams are not necessarily drawn to scale.

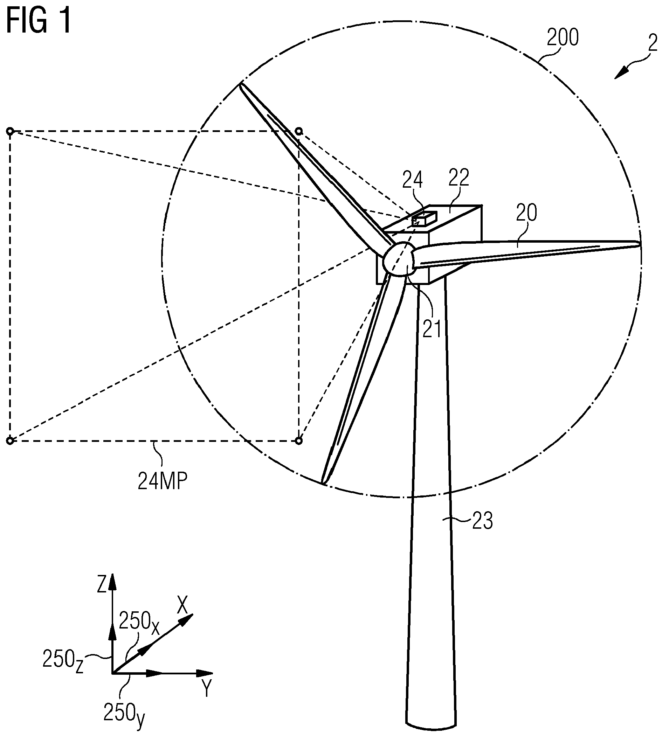

Figure 1 is a schematic diagram of a variable-speed wind turbine 2. Rotor blades 20 are mounted to a hub or spinner 21, which in turn drives a generator installed inside a nacelle 22. The axis of rotation (and therefore also the rotor plane) of a large wind turbine may be tilted relative to the horizontal in order to prevent collisions between the long rotor blades and the tower. The nacelle 22 is mounted on top of a tower 23. A lidar system 24 is arranged to obtain wind measurements upwind of the rotor plane 200. In this exemplary embodiment, the lidar system 24 obtains measurements in a far plane 24MP. Preferably, the lidar system 24 is configured so that the height of its measurement plane 24MP is at least the radius of the rotor plane 200. The lidar system 24 may be configured to measure in more than one plane. A rectangular measurement plane is shown here, but a measurement plane can have any other suitable shape. With the measurements obtained in the plane 24MP, it is possible to construct a wind vector with its origin in the centre of the rotor plane 200.

A wind turbine controller (not shown) issues control signals to various components as appropriate. Pitch setpoints generated in an embodiment of the inventive pitch controller, which will be described in the following, are issued to the pitch systems of the three rotor blades 20 so that the generator can deliver optimum power output while maintaining safe operation.

The diagram also indicates a 3D Cartesian space defined by orthogonal X, Y, and Z axes, whereby the rotor plane 200 lies in the YZ plane, and the axis of rotation lies along the X axis. Although shown to one side, the origin of the 3D space at the junction of the X, Y, and Z axes may be assumed to lie in the centre of the rotor plane 200.

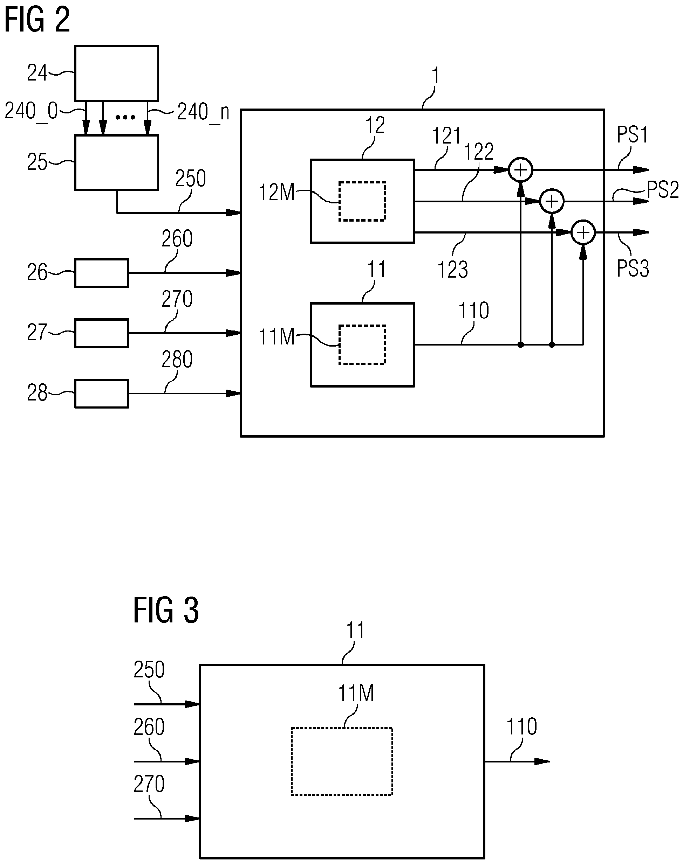

Figure 2 shows a simplified block diagram with a pitch controller 1 for a wind turbine as shown in Figure 1. The diagram also shows the lidar system 24 configured to deliver its measurements to a lidar post-processing module 25, which computes a wind vector 250 from the lidar measurements 240_0, ..., 240_n. Any wind vector 250 comprises a wind speed component 250x, a wind shear component 250z, and a wind veer component 250y in the 3D space indicated in Figure 1.

The pitch controller 1 receives the wind vector 250, and also a nacelle acceleration value 260 from a nacelle accelerometer; a generator speed value 270 from a generator encoder 27; and a rotor azimuth angle 280 from a rotor encoder 28.

The pitch controller 1 comprises a CPC module 11 to compute a collective pitch control term 110, and an IPC module 12 to compute individual pitch control terms 121, 122, 123. The CPC module 11 receives the wind vector 250, the generator speed 270 and nacelle acceleration 260 as input. The IPC module 12 receives the wind vector 250, azimuth angle 280 and nacelle acceleration 260 as input.

Each individual pitch term 121, 122, 123 is added to the common pitch term 110, and the pitch controller 1 outputs three pitch setpoints PS1, PS2, PS3 which are forwarded to the pitch systems of the rotor blades.

Figure 3 shows a block diagram of the CPC module 11. This module 11 implements a first state space model 11M in an explicit discrete time-variant system representation:

$$X(k+1) = A_{CPC}(k)X(k) + B_{CPC}(k)\begin{pmatrix}\omega(k)\\\alpha(k)\\v(k)\end{pmatrix} \qquad (1)$$

$$PitchCol(k) = C_{CPC}(k)X(k) + D_{CPC}(k)\begin{pmatrix}\omega(k)\\a(k)\\v(k)\end{pmatrix} \qquad (2)$$

where k is the current sample; X is the state vector of this state-space model 11M; PitchCol is the output variable or common pitch term 110; $A_{CPC}$, $B_{CPC}$, $C_{CPC}$, $D_{CPC}$ are state-space matrices of this state-space model 11M, previously configured for this specific wind turbine in the optimisation process explained in more detail below. Components of the input or control vector are current values of generator speed $\omega$ (generator speed 270 in Figure 2), nacelle acceleration $\alpha$ (nacelle acceleration 260 in Figure 2) and wind speed v (the wind speed component 250x of the wind vector 250 in Figure 2). At any one time, the collective pitch term PitchCol is obtained from the previously computed state vector X, the output matrix C, and the feedforward matrix D. The computational steps are executed by the control algorithm for each sample k. An exemplary sample time may be in the order of 100 ms, for example.

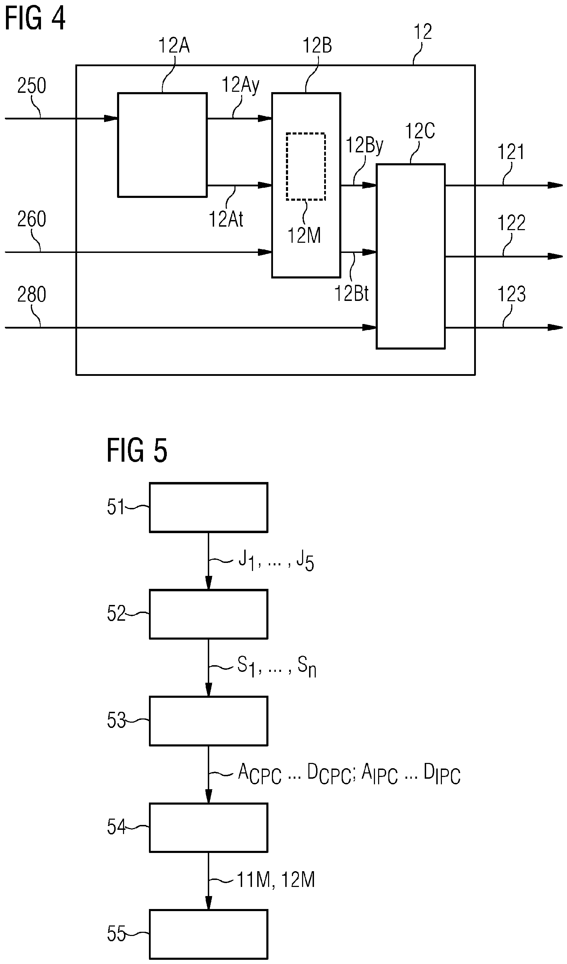

Figure 4 shows a block diagram of the IPC module 12. During a first step, block 12A applies an inverse trigonometric function to compute wind yaw 12Ay and wind tilt 12At values from the current wind vector 250 relative to the axis of rotation of the rotor plane 200 as follows:

$$12Ay = \tan^{-1}\left(\frac{250y}{250x}\right) \qquad (3)$$

$$12At = \tan^{-1}\left(\frac{250z}{250x}\right) \qquad (4)$$

where 250x, 250y, 250z are the wind speed, wind veer and wind shear components of the current wind vector 250.

In a subsequent step, a multivariable control block 12B implements a second state space model 12M to compute parameters from its inputs, namely the current wind yaw 12Ay, wind tilt 12At, and nacelle acceleration 260 values 260. To this end, the multivariable control block 12B implements state space matrices in an explicit discrete time-variant system representation:

$$X(k+1) = A_{IPC}(k)X(k) + B_{IPC}(k)\begin{pmatrix}\gamma(k)\\\tau(k)\\\alpha(k)\end{pmatrix} \qquad (5)$$

$$\begin{pmatrix}PitchYaw(k)\\PitchTilt(k)\end{pmatrix} = C_{IPC}(k)X(k) + D_{IPC}(k)\begin{pmatrix}\gamma(k)\\\tau(k)\\\alpha(k)\end{pmatrix} \qquad (6)$$

where k is the current sample; X is the state vector of the state-space model 12M; and $A_{IPC}$, $B_{IPC}$, $C_{IPC}$, $D_{IPC}$ are state-space matrices of the state-space model 12M. Components of the control vector are: current wind yaw $\gamma$ and wind tilt $\tau$ values (the 12Ay, 12At outputs from block 12A, respectively), and nacelle acceleration $\alpha$ (nacelle acceleration 260 in Figure 2). The output vector of the state-space model 12M comprises a pitch yaw value PitchYaw(k) and a PitchTilt(k) value, indicated as outputs 12By, 12Bt respectively in the diagram.

PitchYaw and PitchTilt are pitch angles in the rotor plane stationary reference frame, and are generated by the IPC module to achieve two different control targets: to correct the alignment of the rotor plane, and to reduce nacelle side-to-side oscillations in spite of the wind disturbances. The computational steps are executed by the control algorithm for each sample k.

During a final step, block 12C performs a suitable transformation such as a Coleman transformation to transform the pitch yaw and pitch tilt parameters 12By, 12Bt (in the stationary reference frame) under consideration of the current rotor azimuth angle 280 into individual pitch terms 121, 122, 123 for the three rotor blades (in the rotating reference frame). Each of these is summed with the collective pitch term 110 to give the pitch setpoint or pitch reference for a specific rotor blade as indicated in Figure 2.

Figure 5 shows a simplified block diagram to illustrate the steps of the inventive control synthesis method that is used to configure or customize a lidar-assisted wind turbine pitch controller. In a first stage 51, target control objectives $J_1$, ..., $J_5$ are identified for that specific wind turbine. In a subsequent step 52, control specifications S1, ..., Sn are developed in the frequency domain from the target control objectives $J_1$, ..., $J_5$.

With this information, state-space matrices $A_{CPC}$, $B_{CPC}$, $C_{CPC}$, $D_{CPC}$; $A_{IPC}$, $B_{IPC}$, $C_{IPC}$, $D_{IPC}$ are developed in a next stage 53 for the CPC module and IPC module of a pitch control algorithm which will fulfil the specifications. In other words, the control designer works with the frequency response of the linear time-invariant (LTI) system to fulfil the specifications S1, ..., Sn imposed by the control objectives $J_1$, ..., $J_5$, i.e. the control designer identifies state-space matrices for a pitch controller that will fulfil the specifications. The state-space matrices of each state space model 11M, 12M include a state or system matrix A; an input matrix B; an output matrix C; and a feedthrough or feedforward matrix D. The state-space matrices are developed in the frequency domain. The state-space models 11M, 12M are developed in step 54 to use a wind vector obtained from a lidar system as well as other relevant time-variant variables. In a final step 55, the state-space models 11M, 12M are tested by performing closed-loop validation in the frequency domain. After validation, the control algorithm is stored in a memory of a controller such as a programmable logic controller (PLC) of that wind turbine.

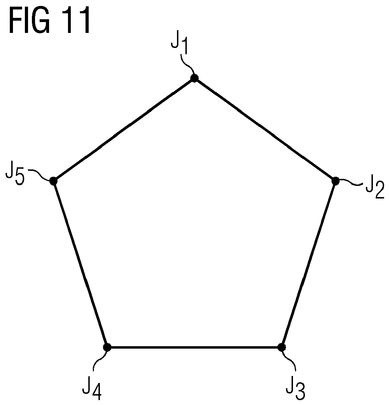

As explained above, the state-space models of the inventive pitch control module 1 are developed in a multi-objective optimisation process. A starting point of the inventive multi-objective pitch control synthesis can be visualized as a pentagon, with five control objectives $J_1$, ..., $J_5$ at the five corners of the pentagon, as shown in Figure 11. In an exemplary embodiment, the five control objectives are: optimization of (annual energy production) AEP $J_1$, minimization of fatigue loads $J_2$, minimization of structural extreme loads $J_3$, optimization of generator speed regulation $J_4$, and reduction in pitch duty activity $J_5$.

Each of these control objectives $J_1$, $J_2$, $J_3$, $J_4$, $J_5$ is weighted by a weighting factor in a cost function J:

$$ J = K J_1^2 + K_2 J_2^2 + K_3 J_3^2 + K_4 J_4^2 + K_5 J_5^2 \qquad (7) $$

where the weighting factors $K_1$, $K_2$, $K_3$, $K_4$, $K_5$ are determined by the wind turbine configuration (rated power output, hub height, rotor blade length, etc.) and its intended installation site (average annual wind speed, average turbulence, etc.). The sum of the weighting factors must be 1 in all optimization scenarios. A weighting factor of 1.0 would mean that the corresponding control objective is mandatory during the optimization process, and the other four would not be considered. Equally, any control objective with a weighting factor of 0 is not considered during the optimization process. The magnitudes of the weighting factors can be visualized as affecting the shape of the pentagon: if all weighting factors are close to 0.2, the shape remains essentially a pentagon; if one or more of the weighting factors is significantly less than or greater than 0.2, the pentagonal shape will be "skewed".

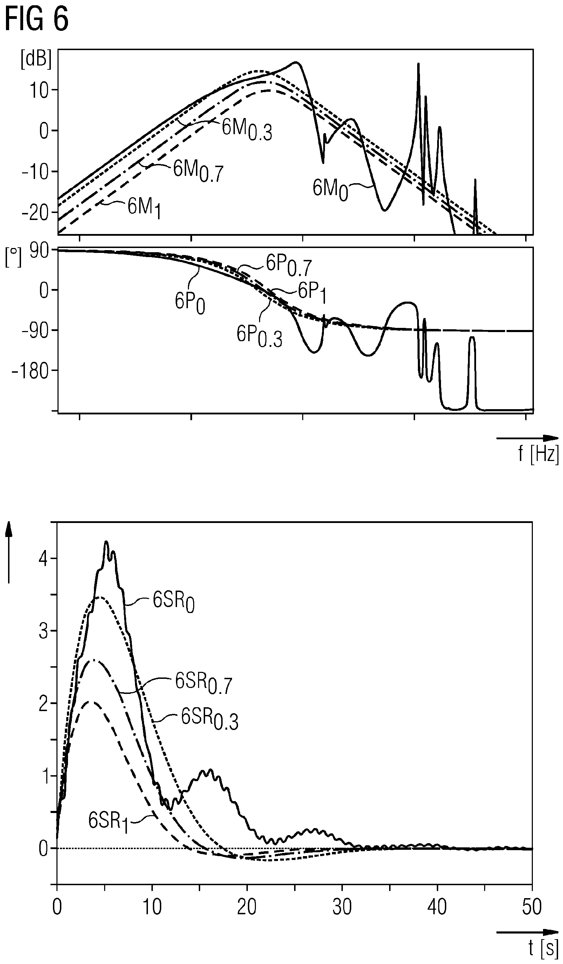

For example, $K_4$ represents the generator speed regulation weighting factor in the cost function of equation (7). Figure 6 shows proposed specifications (curves 6M, 6P) for different K values (0, 0.3, 0.7, 1) for the generator speed response as a function of wind speed in the frequency domain, showing generator speed magnitude [dB] and phase [°] against frequency [Hz], and a step response (curves 6SR) of generator speed as a function of wind speed in the time domain. A value of 0 for the weighting factor $K_4$ corresponds to the conventional approach (represented by curve $6M_0$), and such a specification will not improve on the tradition control performance. However, when the weighting factor $K_4$ has a value of 1 (represented by curve $6M_1$), the inventive lidar-assisted pitch control focusses entirely on improving the generator speed regulation. When the weighting factor $K_4$ has a value between 0 and 1, the inventive pitch controller achieves an improvement in generator speed regulation, while at the same time achieving an improvement for the other control objectives $J_1$, $J_2$, $J_3$, $J_5$, depending on the magnitudes of their respective weighting factors. In an early stage of control design, a set of candidate specifications is identified, i.e. a set of suitable specifications for the five control objectives $J_1$ - $J_5$. After identifying the control objectives for a specific wind turbine and a set of appropriate specifications, the state-space matrices of the state-space models 11M, 12M are developed in an iterative process that will fulfil the specifications. The aim of the control synthesis is to solve the cost function (5) by developing state-space models 11M, 12M for collective and individual pitch control that will ensure that the specifications are fulfilled.

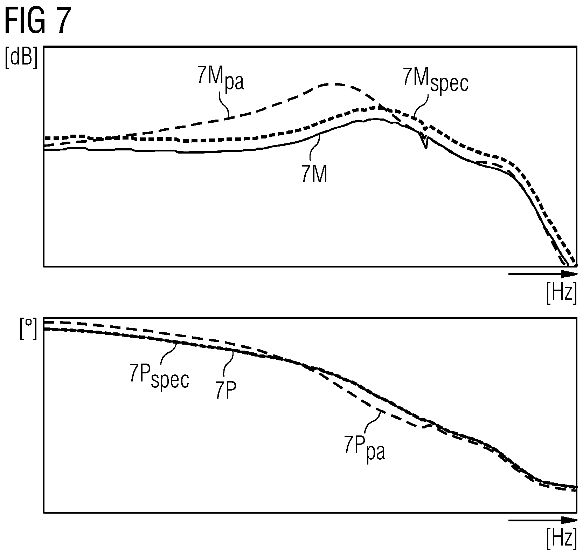

Figure 7 is a Bode diagram illustrating a further exemplary stage in the control synthesis process of Figure 5, with regard to another specification, i.e. the tower base load response as a function of wind velocity. The diagram shows the frequency-domain response of tower base load magnitude [dB] (curves $7M_{spec}$, 7M, $7M_{pa}$) and phase [°] (curves

$7P_{spec}$, 7P, $7M_{pa}$) against frequency [Hz]. Curves $7M_{spec}$, $7P_{spec}$ represent the control specification, for example that the maximum amplitude of tower base load should be 10% less than what can be achieved by the conventional pitch control $7M_{pa}$, $7P_{pa}$. A specification $7M_{spec}$, $7P_{spec}$ is derived from optimization of a cost function as explained above, and represents the different control objectives considered during the optimization process. Curves $7M_{pa}$, $7P_{pa}$ represent the results of conventional pitch control that does not combine lidar measurements with other operating variables, resulting in a sub-optimal performance as evidenced by significant deviations from the specification $7M_{spec}$, $7P_{spec}$. In contrast, the inventive pitch control achieves a closer adherence to the specifications $7M_{spec}$, $7P_{spec}$, particularly over frequency ranges where the wind measurements from a lidar system can augment the pitch control. Curves 7M, 7P represent the predicted outcome of control using the inventive method, for example at the closed-loop validation stage 54 of Figure 5, demonstrating that the specification will be adhered to closely over the entire frequency range if the rotor blades of a wind turbine will be pitched using the inventive lidar-assisted pitch control. Similarly, the other specifications (e.g. output power as a function of wind, etc.) will influence the ultimate composition of the state-space matrices)

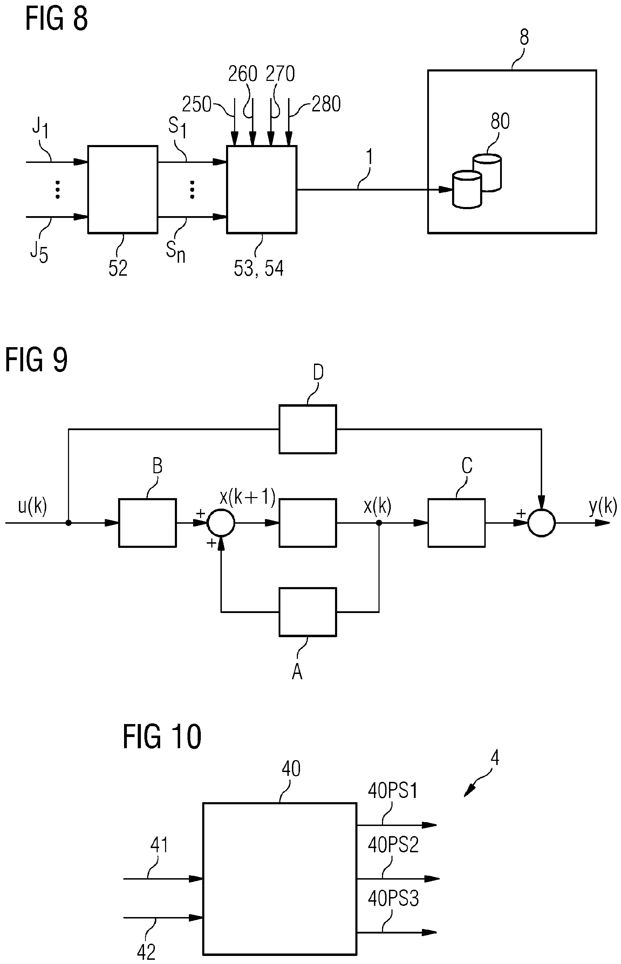

Figure 8 is a block diagram to illustrate the inventive control synthesis method. After identifying the control objectives $J_1$, $J_2$, $J_3$, $J_4$, $J_5$ for a specific wind turbine 2 of the type shown in Figure 1, appropriate specifications S1, ..., Sn are formulated in a preliminary design stage 52 (as explained in Figure 5). With this information, state space models 11M, 12M of a pitch control algorithm 1 are designed ("synthesized") in a subsequent stage 53, 54 (as explained in Figure 5) to compute individual pitch setpoints from a lidar wind vector 250 and other relevant inputs 260, 270, 280 (as described in Figures 3 - 4) to ensure that specifications S1, ..., Sn are met during operation of the wind turbine. The control algorithm 1 is loaded into the memory 80 of a wind turbine controller 8. As explained above, during operation of the wind turbine controlled by the wind turbine controller 8, the output of this pitch control algorithm 1 will be a set of pitch setpoints that are continually optimized to adapt to changing conditions during operation of the wind turbine, while fulfilling the wind turbine specifications.

Figure 9 is a block diagram of a state-space model. The diagram shows an input u(k) representing the input variable(s) to that state-space model, and an output y(k) representing the output variable(s) of that state-space model. The state-space matrix operators are labelled A, B, C, D and represent the state-space matrices $A_{CPC}$, $B_{CPC}$, $C_{CPC}$, $D_{CPC}$ of the first state-space model 11M, or the state-space matrices $A_{IPC}$, $B_{IPC}$, $C_{IPC}$, $D_{IPC}$ of the second state-space model 12M. A state-space model combines various different paths from inputs, state vectors and matrix operators to generate its output. To develop the collective pitch control state-space model 11M and the individual pitch control state space model 12M for the pitch controller of a specific wind turbine, the control objectives and target specifications are first identified as described above, and the state-space matrices are then developed in an iterative process that will fulfil the specifications for that wind turbine.

Figure 10 shows a prior art lidar-assisted pitch controller 4 of a variable-speed wind turbine. This known type of pitch controller computes pitch setpoints 40PS1, 40PS2, 40PS3 for three rotor blades of the wind turbine using wind information 41 obtained from a lidar system and generator speed 42 provided by an encoder. However, even though these pitch setpoints can react reasonably well to changes in the wind, a drawback of the known pitch control systems is that they are not designed considering a multivariable control scenario. While the pitch setpoints may, on the whole, achieve an acceptable level of performance, the inability of the conventional pitch controllers to simultaneously consider the effects of multiple variables on multiple behavioural parameters means that the chosen pitch may frequently result in sub-optimal behaviour, leading to higher-than-necessary loading, higher-than-necessary fatigue levels, higher-than-necessary pitch duty, etc. The known approaches to pitch control ultimately result in an unfavourably high LCOE for a wind turbine. As explained above, the inventive approach uses a multivariable control scenario to define different control targets and to use more information regarding wind turbine behaviour (generator speed, nacelle oscillation, rotor azimuth angle) and also wind vector information predicted for the rotor plane.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.


**Claims**

1. A method of configuring a wind turbine pitch controller (1) to compute pitch setpoints (PS1, PS2, PS3) for rotor blades (20) of a wind turbine (2), the method comprising the steps of

- identifying a plurality of target control objectives ($J_1$, $J_2$, $J_3$, $J_4$, $J_5$) for a specific wind turbine (2);
- developing a first state-space model (11M) for the computation of a collective pitch term (110) of a pitch setpoint (PS1, PS2, PS3) and developing a second state-space model (12M) for the computation of individual pitch terms (121, 122, 123) of the pitch setpoints (PS1, PS2, PS3), which state-space models (11M, 12M) are developed on the basis of the target control objectives ($J_1$, $J_2$, $J_3$, $J_4$, $J_5$) and a wind vector (250); and
- installing the pitch controller (1) in a memory (80) of a wind turbine controller (8) of that wind turbine (2).

2. A method according to claim 1, wherein a first set of state-space matrices ($A_{CPC}$, $B_{CPC}$, $C_{CPC}$, $D_{CPC}$) is developed for the first state-space model (11M).

3. A method according to any of the preceding claims, wherein the input vector of the first state-space model (11M) comprises a generator speed component, a nacelle acceleration component, and a wind speed component of the wind vector (250) .

4. A method according to any of the preceding claims, wherein a second set of state-space matrices ($A_{IP}$, $B_{IP}$, $C_{IP}$, $D_{IP}$) is developed for the second state-space model (12M) whose output variable is a vector comprising a rotor plane pitch yaw component (12By) and a rotor plane pitch tilt (12Bt) component.

5. A method according to any of the preceding claims, wherein the input vector of the second state-space model (12M) comprises a wind yaw component (12Ay) computed from the wind vector (250), a wind tilt component (12At) computed from the wind vector (250), and a nacelle acceleration component.

6. A method according to any of the preceding claims, comprising a step of determining specifications (S1, ..., Sn) for that wind turbine (2) on the basis of the target control objectives ($J_1$, $J_2$, $J_3$, $J_4$, $J_5$), wherein a specification (S1, ..., Sn) relates wind velocity to any of: generator rotational velocity; electric power; rotor blade pitch angle; structural load.

7. A method according to any of the preceding claims, wherein the state-space models (11M, 12M) are developed in an iterative process to fulfil the specifications (S1, ..., Sn).

8. A wind turbine pitch controller (1) configured using the method according to any of claims 1 to 7 to generate an individual pitch setpoint (PS1, PS2, PS3) for each rotor blade (20) of a wind turbine (2), comprising

   - a means of receiving an input wind vector (250) from a lidar system (25) of that wind turbine (2);
   - a first module (11) configured to apply the first state-space model (11M) to compute a common pitch term (110) for the rotor blades (20);
   - a second module (12) configured to apply the second state-space model (12M) to compute an individual pitch term (121, 122, 123) for each of the rotor blades (20);
   - wherein a pitch setpoint (PS1, PS2, PS3) is the sum of the common pitch term (110) and a corresponding individual pitch term (121, 122, 123).

9. A pitch controller according to claim 8, configured to receive a nacelle acceleration value (260), a generator velocity value (270), and a rotor azimuth value (280).

10. A pitch controller according to any of claims 8 to 9, wherein the first module (11) is configured to receive the generator velocity value (270), the nacelle acceleration value (260) and a wind speed component of the wind vector (250), and to apply the state-space matrices ($A_{CPC}$, $B_{CPC}$, $C_{CPC}$, $D_{CPC}$) of the first state-space model (11M) to compute the common pitch term (110).

11. A pitch controller according to any of claims 8 to 10, wherein the second module (12) is configured to receive the wind vector (250) and to compute a wind yaw term (12Ay) and wind tilt term (12At) from the wind vector (250).

12. A pitch controller according to claim 11, wherein the second module (12) is further configured to receive the nacelle acceleration value (260) and to apply the state-space matrices ($A_{IPC}$, $B_{IPC}$, $C_{IPC}$, $D_{IPC}$) of the second state-space model (12M) to compute a pitch yaw term (12By) and a pitch tilt term (12Bt) from the wind yaw term (12Ay) and wind tilt term (12At).

13. A pitch controller according to claim 11 or claim 12, wherein the second module (12) is further configured to receive the rotor azimuth value (280) and to apply a Coleman transformation to obtain the individual pitch terms (121, 122, 123) from the rotor azimuth value (280), the pitch yaw term (12By) and the pitch tilt term (12Bt).

14. A wind turbine (2) comprising

- a tower (23) supporting a nacelle (22);
- an aerodynamic rotor (200) mounted to the nacelle (22), which aerodynamic rotor (200) comprises a plurality of rotor blades (20) mounted to a hub (21) and configured to drive a generator;
- a lidar system (24) configured to obtain wind speed measurements (240_0, ..., 240_n) in a measuring plane (M1, M2) at a distance upwind of the aerodynamic rotor (200); and
- a pitch controller (1) according to any of claims 8 to 13 configured to compute individual pitch setpoints (PS1, PS2, PS3) for the rotor blades (20) on the basis of the wind speed measurements (240_0, ..., 240_n).

15. A wind turbine according to claim 14, comprising a sensor assembly (26) configured to measure amplitude and/or frequency of a fore-aft nacelle oscillation and/or a side-to-side nacelle oscillation.

# FIG 1

# FIG 2

# FIG 3

FIG 4

FIG 5

## FIG 6

## FIG 7

FIG 8

J$_1$

J$_5$

52

S$_1$

S$_n$

250 260 270 280

53, 54

1

8

80

FIG 9

D

B

u(k)

x(k+1)

x(k)

C

y(k)

A

FIG 10

40

41

42

40PS1

40PS2

40PS3

4

FIG 11

Europäisches
Patentamt

European
Patent Office

Office européen
des brevets

## EUROPEAN SEARCH REPORT

Application Number

EP 21 38 2152

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HASSAN H M ET AL: "Robust dynamic output feedback pitch control for flexible wind turbines", ENERGYTECH, 2012 IEEE, IEEE, 29 May 2012 (2012-05-29), pages 1-6, XP032237312, DOI: 10.1109/ENERGYTECH.2012.6304632 ISBN: 978-1-4673-1836-5 | 1-7 | INV. F03D7/02 F03D7/04 |
| Y | * Sections II and III * | 8-15 | |
| Y | YUAN YUAN ET AL: "Multivariable robust blade pitch control design to reject periodic loads on wind turbines", RENEWABLE ENERGY, PERGAMON PRESS, OXFORD, GB, vol. 146, 24 June 2019 (2019-06-24), pages 329-341, XP085904443, ISSN: 0960-1481, DOI: 10.1016/J.RENENE.2019.06.136 [retrieved on 2019-06-24] * the whole document * | 8-15 | |
| A | WO 2013/152776 A1 (ELECTRONIC AS KK [DK]) 17 October 2013 (2013-10-17) * the whole document * | 1-15 | TECHNICAL FIELDS SEARCHED (IPC) F03D G05B |
| A | MAHMOOD MIRZAEI ET AL: "Individual pitch control using LIDAR measurements", CONTROL APPLICATIONS (CCA), 2012 IEEE INTERNATIONAL CONFERENCE ON, IEEE, 3 October 2012 (2012-10-03), pages 1646-1651, XP032297955, DOI: 10.1109/CCA.2012.6402691 ISBN: 978-1-4673-4503-3 * the whole document * | 1-15 | |

The present search report has been drawn up for all claims

| Place of search | Date of completion of the search | Examiner |
|---|---|---|
| The Hague | 23 July 2021 | Libeaut, Laurent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 38 2152

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2021

| Patent document cited in search report | Publication date | Patent family member(s) | Publication date |
|---|---|---|---|
| WO 2013152776 A1 | 17-10-2013 | NONE | |

EPO FORM P0459

For more details about this annex : see Official Journal of the European Patent Office, No. 12/82